# EUROPEAN PATENT APPLICATION

(11) **EP 4 783 432 A1**
(43) Date of publication of application: **29.07.2026**
(21) Application number: 26153220.4
(22) Date of filing: 21.01.2026
(51) Int. Cl.: H02K 7/116, B65B 65/02, H02K 11/33, H02K 11/21, H02P 5/52, H02P 5/747

(54) **HIGHLY DYNAMIC MOVEMENT ASSEMBLY FOR OPERATING STATIONS OF PACKAGING MACHINES**

(30) Priority: 22.01.2025 IT 202500001014
(71) Applicant: SACMI PACKAGING & CHOCOLATE S.P.A., 40026 Imola (BO) (IT)
(72) Inventor: FRANGELLA, Gianni, 40026 IMOLA BO (IT); GABRIELLI, Ernesto, 40026 IMOLA BO (IT)
(74) Representative: Modiano, Micaela Nadia

(57) **Abstract**

A highly dynamic movement assembly (1) for operating stations (A, B) of packaging machines comprising at least one drive unit (2) and at least one driven unit (3) which is designed for the movement of a movable unit of an operating station (A, B); the drive unit (2) is equipped with at least two controlled electric motors (4), on the shaft of each of which a pinion (5) is keyed; the driven unit (3) comprises at least one ring gear (6) on which the pinions (5) mesh; at least one control and management apparatus which controls the controlled electric motors (4) and is configured for the simultaneous adjustment of the power supply of the motors (4), in so doing defining a common rule of motion and a constant application of mutually opposite torques, which define a preloading on the ring gear (6) by the pinions (5) in order to cancel out mechanical meshing plays on the ring gear (6).

## Description

The present invention relates to a highly dynamic movement assembly for operating stations of packaging machines, with particular reference to the movement of specific operating stations such as wrapping wheels and/or product singulator disks (i.e. designed to separate the individual products and deliver them in a suitably stepped manner).

A rule of motion can be considered highly dynamic when it is subject to sudden accelerations (including substantially impulsive accelerations) and abrupt changes of direction.

An example of components that entail these types of motion, when used in packaging machines, are intermitters which, powered by a motor that moves at a constant speed (or with a rule of motion that is not subject to abrupt accelerations), generate an intermittent motion of their output shaft, i.e. wherein stopped conditions alternate with moving conditions at a predefined speed, and these conditions succeed each other substantially instantaneously.

In order to ensure an operation of this type, normally mechanical devices are used which are extremely rigid in operation, and which are also very expensive and energy-intensive.

In particular it is necessary to adopt motors that can generate very high levels of torque (and therefore motors of extremely high rated power) in order to be capable of driving the mechanical devices (such as for example intermitters) that can move the final driven unit according to the rule of motion of interest. It is evident that such motors are extremely expensive and consume a great deal of electricity.

In addition, generally each device is designed especially to ensure a particular movement of the driven unit and therefore no changes to its rule of motion are possible.

Particularly complex versions of such devices make greater flexibility possible, but they are much more expensive and, often, uneconomic for various different applications.

It should be noted that few conventional mechanical devices ensure a good flexibility of operation and are supplied by an extremely small number of makers, and therefore even sourcing them is often a complex matter.

The aim of the present invention is to solve the above mentioned drawbacks, by providing a highly dynamic movement assembly for operating stations of packaging machines that offers much lower energy consumption than conventional devices.

Within this aim, an object of the invention is to provide a highly dynamic movement assembly for operating stations of packaging machines that is versatile and adapted to provide variations and adjustments of the rule of motion of the driven unit as well.

Another object of the invention is to provide a highly dynamic movement assembly for operating stations of packaging machines that is constituted by easily-sourced components.

Another object of the invention is to provide a highly dynamic movement assembly for operating stations of packaging machines that is low cost.

Another object of the invention is to provide a highly dynamic movement assembly for operating stations of packaging machines that is adapted to be used for moving any movable unit, such as for example wrapping wheels, product singulator disks, and equivalent components.

Another object of the invention is to provide a highly dynamic movement assembly for operating stations of packaging machines that offers reduced space occupation.

Another object of the present invention is to provide a highly dynamic movement assembly for operating stations of packaging machines that is easily and practically implemented and safely applied.

This aim and these and other objects that will become better apparent hereinafter are achieved by a highly dynamic movement assembly for operating stations of packaging machines of the type comprising at least one drive unit and at least one driven unit which is designed for the movement of a movable unit of an operating station, characterized in that:
- the drive unit is equipped with at least two controlled electric motors, on the shaft of each of which a pinion is keyed,
- the driven unit comprises at least one ring gear on which said pinions mesh, and further comprising
- at least one control and management apparatus which controls said controlled electric motors and is configured for the simultaneous adjustment of the power supply of said electric motors, in so doing defining a common rule of motion and a constant application of mutually opposite torques, which define a preloading on said ring gear by said pinions in order to cancel out mechanical meshing plays on the ring gear.

Further characteristics and advantages of the invention will become better apparent from the detailed description that follows of a preferred, but not exclusive, embodiment of the highly dynamic movement assembly for operating stations of packaging machines, which is illustrated by way of non-limiting example in the accompanying drawings wherein:

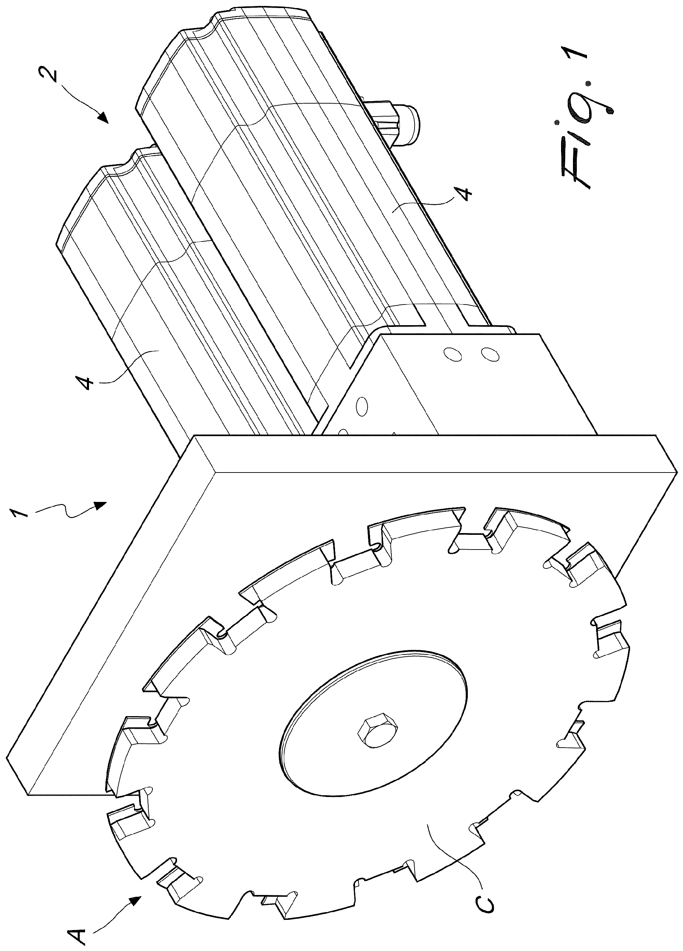

Figure 1 is a schematic perspective view of a possible embodiment of a highly dynamic movement assembly for operating stations, constituted by a singulator disk, of packaging machines;

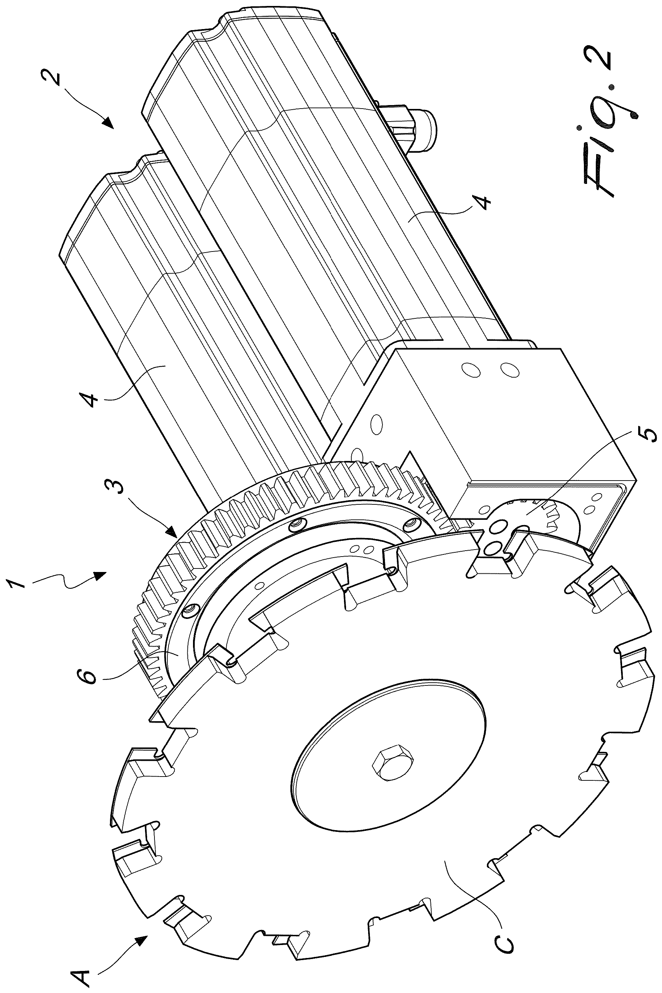

Figure 2 is a partially cutaway schematic perspective view of the assembly of Figure 1;

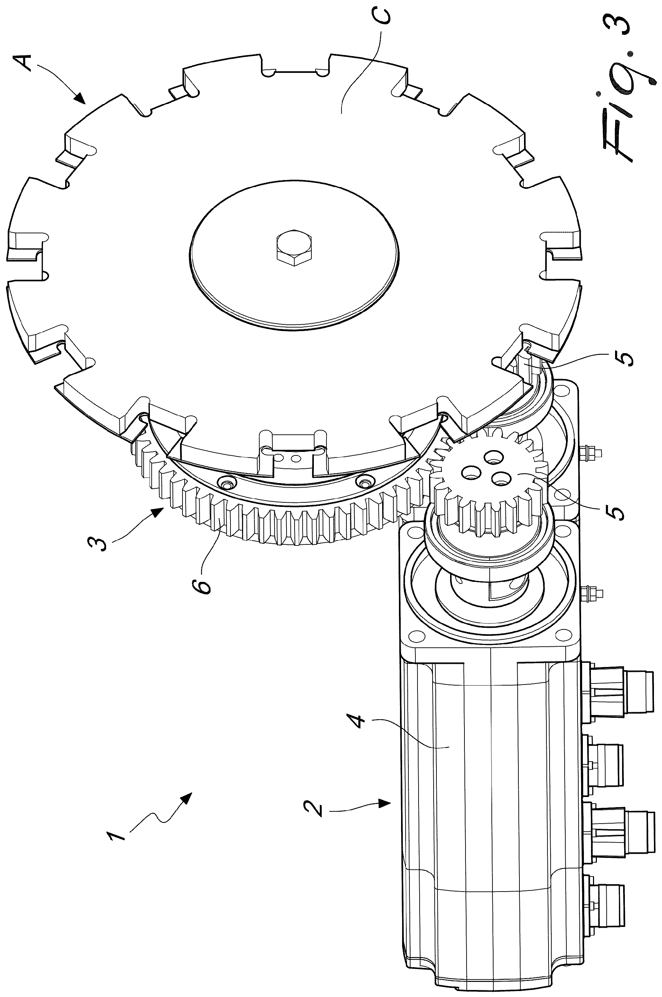

Figure 3 is a further cutaway schematic perspective view of the assembly of Figure 1;
Figure 4 is a schematic perspective view of a possible embodiment of an operating station, constituted by a wrapping wheel, moved by means of an assembly according to the invention;
Figure 5 is a schematic perspective view of a possible embodiment of a highly dynamic movement assembly for the operating station, i.e. the wrapping wheel, of Figure 4;
Figure 6 is a partially cutaway schematic perspective view of the assembly of Figure 5.

With particular reference to the figures, the reference numeral 1 generally designates a highly dynamic movement assembly for operating stations A, B of packaging machines.

The movement assembly 1 according to the invention comprises at least one drive unit 2 and at least one driven unit 3 which is designed for the movement of a movable unit C, D of an operating station A, B.

The assembly 1 comprises a drive unit 2 equipped with at least two controlled electric motors 4, on the shaft of each of which a pinion 5 is keyed.

The assembly 1 is further equipped with a driven unit 3 which comprises at least one ring gear 6 on which the pinions 5 mesh: the ring gear 6 is integral with the movable unit C, D of the operating station A, B.

At least one control and management apparatus is also provided, which controls the controlled electric motors 4 and is configured for the simultaneous adjustment of the power supply of the electric motors 4, in so doing defining a common rule of motion and a constant application of mutually opposite torques, which define a preloading on the ring gear 6 by the pinions 5 in order to cancel out mechanical meshing plays on the ring gear 6 itself.

More precisely, attention is drawn to the fact that, in a coupling between a generic pinion and a generic ring gear, there is always a small mechanical play present: this mechanical play determines a delay if the motor is instantaneously stopped and/or if there is an impulsive acceleration of the motor and/or a change of direction.

To overcome this problem, the gears are forced up against each other: this results in a great increase in the resistant torques (which are due to the friction force between the touching surfaces that are forced up against each other). To move this type of device it is therefore necessary to provide a high torque, which can be ensured only by high-powered motors (which consume a great deal of energy and which have a high purchase cost).

The assembly according to the invention, however, has two separate pinions 5 (keyed onto the shafts of two separate motors 4) and can therefore mesh with the ring gear 6 so eliminating mechanical play (or reducing it to below a predefined threshold that makes it possible to rule out delays at accelerations that are impulsive or, in any case, high).

In fact the control and management apparatus can drive the motors 4 so that the respective teeth are always touching on respective walls of the recess present between two successive teeth of the ring gear 6.

A first, extremely simplified drive mode of the motors 4, executed by the control and management apparatus, could be the assignment of a direction of rotation specific to each motor 4: for example a first motor 4 could be assigned to actuate clockwise rotations and a second motor 4 could be assigned to actuate anticlockwise rotations. When one of the two motors 4 is not powered up so as to generate the rotation in the direction assigned to it, that motor stays idle.

In this manner, the passive motor 4 will always be entrained by the ring gear 6 and at least one tooth thereof will abut against a first delimiting wall of the recess between two consecutive teeth of the ring gear 6, while the active motor 4 will entrain the ring gear 6 in its direction of rotation, so abutting against a second delimiting wall of the recess between two consecutive teeth of the ring gear 6.

Considering the particular shape structure of each delimited recess between two successive teeth of the ring gear 6, a first wall will always be located opposite a second wall. Therefore, upon a change of direction the motor that previously was passive will become active, and vice versa. The particular arrangement of the teeth of the two pinions 5 against the teeth (which define the delimiting walls of the recesses) of the ring gear 6 will enable the elimination of any delay owing to mechanical plays (because each tooth will always be in contact with the respective wall of the recess that contains it on which to exert the thrust).

Similarly, by generating a relative torque (which can be of minimal intensity) between the two pinions 5, it will be possible to ensure a preloading (meaning the forcing of the teeth of a first pinion 5 up against respective first walls of a recess of the ring gear 6, i.e. against first lateral faces of teeth of the ring gear 6, and forcing of the teeth of a second pinion 5 up against respective walls of an additional recess of the ring gear 6, i.e. against second lateral faces of teeth on the ring gear 6).

The result that is obtained by virtue of this particular implementation architecture and of this specific control logic is that of having an instantaneous response, without delays, of the movable elements C, D of the stations A, B even for respective rules of motion that entail high accelerations, abrupt stops and/or rapid reversals of the direction of rotation.

It should be noted that, in an embodiment of undoubted practical and applicative interest, the controlled electric motors 4 can advantageously be low-inertia brushless motors, preferably of a type chosen from salient-pole motors, permanent magnet motors, low-inertia synchronous servomotors, stepper motors and derivatives thereof.

The adoption is not ruled out of motors 4 of different types for specific applications.

With reference to the use of the assembly 1 for operating stations A, B of packaging machines such as those habitually in use for packaging food products or pharmaceuticals or chemical products (or in other industrial sectors in which there are similar requirements), each of the controlled electric motors 4 can have a rated power comprised between 0.5 kW and 5 kW, preferably between 1 kW and 3 kW, even more preferably between 1.2 kW and 2.5 kW.

By way of example, the use has been tested of two motors 4 with rated power comprised between 1.2 KW and 2.5 KW for operating stations such as singulator disks A and wrapping wheels B.

The at least one control and management apparatus can conveniently comprise at least one device for instantaneous detection of the position of the rotor of each motor 4.

Such device can profitably be selected from an optical rotary encoder, an inductive rotary encoder, an infinite potentiometer, a rotary resolver, and combinations thereof.

However, the possibility is not ruled out of also using devices of different types for specific applications.

The control and management apparatus can advantageously further comprise at least one apparatus for controlling the position and speed, which can be preferably selected from a motor speed controller, a motor driver, a PWM controller, a voltage regulator dimmer, and combinations thereof.

However, the possibility is not ruled out of also using apparatuses of different types for specific applications.

It should be noted that the at least one apparatus for controlling the position and speed can positively be configured for the execution of software for the simultaneous control of the at least two motors 4 so as to maintain the predefined preloading on the ring gear 6, with corresponding engagement of at least one tooth of at least one first pinion 5 on a first delimiting wall of a recess between successive teeth of the ring gear 6 and of at least one tooth of at least one second pinion 5 on a second wall, opposite the first wall, for delimiting a recess between successive teeth of the ring gear 6.

It should further be noted that the transmission ratio between one of the pinions 5 and the ring gear 6 can usefully be comprised between 1 to 20 and 1 to 1.

Preferably a transmission ratio of between 1 to 10 and 1 to 2 is adopted.

Even more preferably the transmission ratio will positively be between 1 to 3 and 1 to 6.

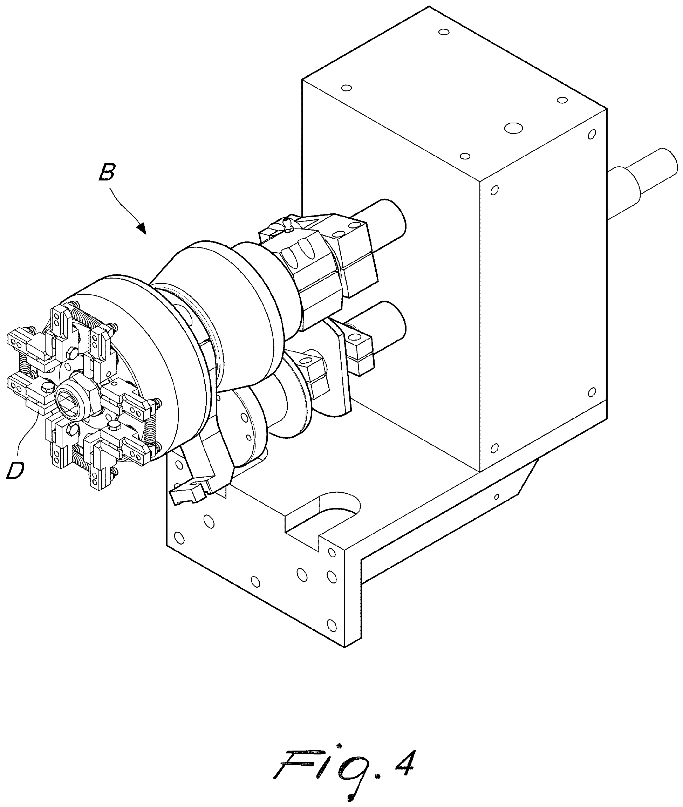

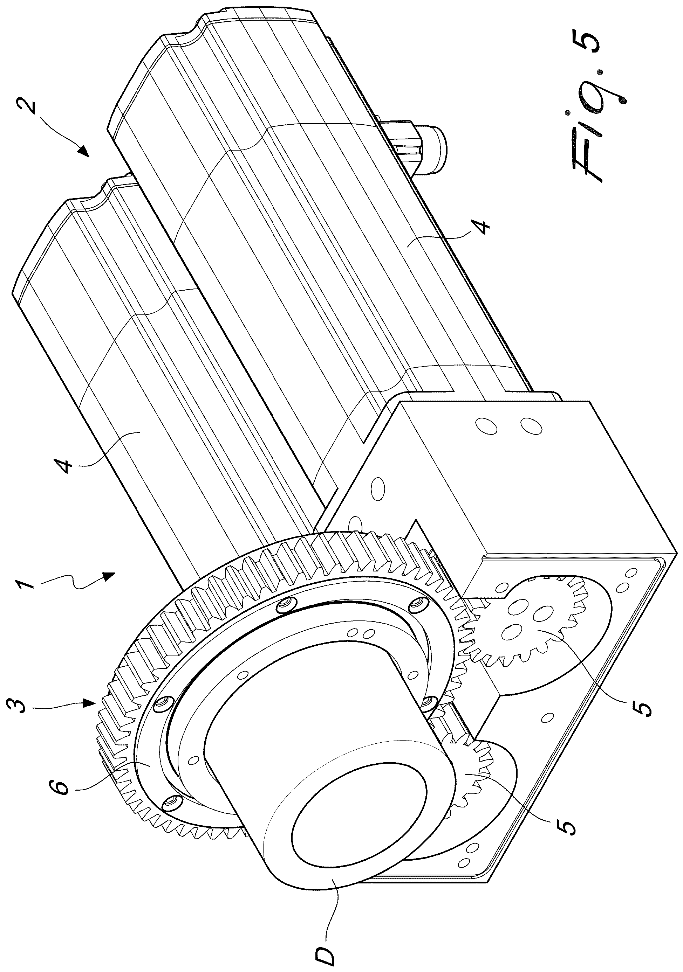

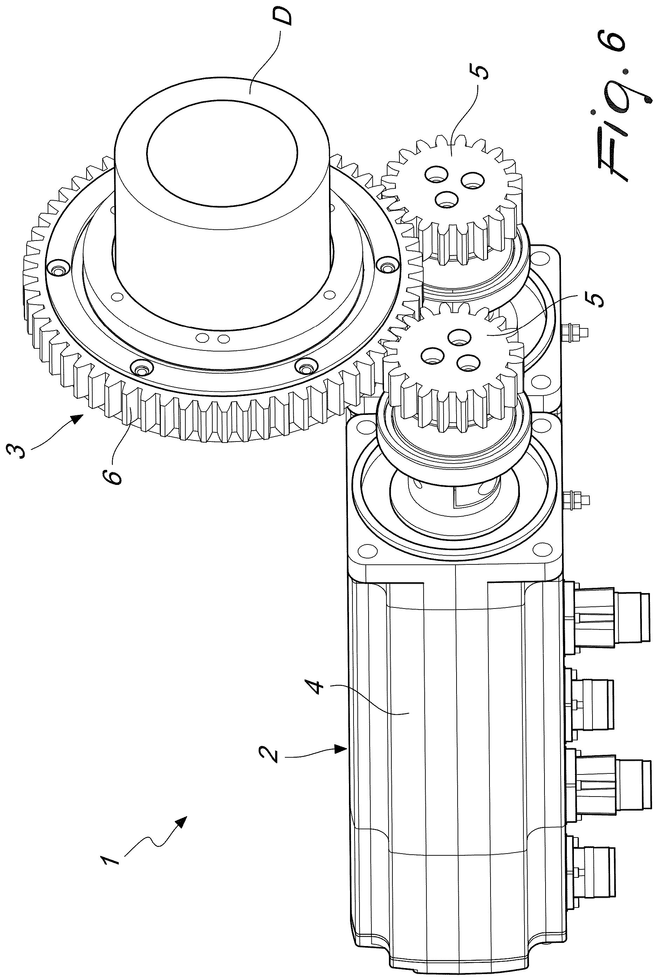

It should be noted that the driven unit 3, in a particular application shown by way of non-limiting example in the accompanying Figures 4 to 6, can conveniently be integral with a wrapping wheel B, equipped with means designed to temporarily block at least one product and at least one sheet for the respective wrapping and movement thereof along a trajectory that affects a plurality of areas for folding and juxtaposition of the sheet on the product, according to a highly dynamic rule of motion, for the purpose of wrapping the product, in so doing isolating it from the outside environment.

As an alternative, and again for the purpose of illustrating one of the possible applications of the present invention, it should be noted that the driven unit 3 can advantageously be integral with a product singulator disk A provided with a plurality of peripheral seats for the temporary accommodation of at least one product and its movement along a substantially circular trajectory according to a highly dynamic rule of motion, for the purpose of retrieving products from a line upstream, in which they are consecutive and contiguous, and delivering them to a line downstream separated from each other according to specific geometric rules.

The protection offered by the present invention also extends to any operating station A, B of packaging machines that comprises at least one movement assembly 1 of the type described above.

Similarly, the protection offered by the present invention also extends to any packaging machine that comprises at least one operating station A, B that is provided with at least one movement assembly 1 of the type described above.

Advantageously the present invention solves the above mentioned problems, by providing a highly dynamic movement assembly 1 for operating stations A, B of packaging machines that offers much lower energy consumption than conventional devices.

In conventional machines in fact, every movement system has an energy consumption of several kW, in any case higher than 5-6 kW; in the assemblies 1 according to the invention, as described above, it is possible to use two motors with a rated power of the order of 1.2 KW each, thus determining an overall energy consumption that is appreciably lower. This advantage is also significant in terms of safeguarding the environment, in that a reduction in energy consumption is increasingly often necessary and required by specific environmental protection regulations.

Conveniently the movement assembly 1 according to the invention is versatile and adapted to provide variations and adjustments of the rule of motion of the driven unit 3 as well: basically, with a single type of assembly 1 it is possible to power the most widely-varying and different operating stations, by virtue of the great versatility afforded by the adoption of motors 4 suitably controlled by the respective apparatus.

Advantageously the movement assembly 1 according to the invention is constituted by components that are easily sourced: in particular the motors 4 and the control and management apparatus are produced by a large number of companies and sold worldwide.

Profitably the movement assembly 1 according to the invention is low cost. In fact the use of commercial components makes it possible to appreciably reduce the costs of their purchase, with respect to what occurs in the known art, where it is necessary to use components that are designed and made especially for each possible application.

Positively the movement assembly 1 according to the invention is adapted to be used for moving any movable unit A, B, such as for example wrapping wheels B, product singulator disks A, and the like.

Usefully, the movement assembly 1 according to the invention offers contained space occupation: in fact, since they do not need to dispense high power levels, the two motors 4 can have small dimensions.

Positively the movement assembly 1 according to the invention is easily and practically implemented: the characteristics described render the assembly 1, any operating station A, B that comprises it, or any packaging machine provided with an operating station A, B equipped with the assembly 1 according to the invention innovations that are certain to be safe in use.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. 102025000001014 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A highly dynamic movement assembly for operating stations (A, B) of packaging machines of the type comprising at least one drive unit (2) and at least one driven unit (3) which is designed for the movement of a movable unit of an operating station (A, B), **characterized in that**:
- the drive unit (2) is equipped with at least two controlled electric motors (4), on the shaft of each of which a pinion (5) is keyed,
- the driven unit (3) comprises at least one ring gear (6) on which said pinions (5) mesh, and further comprising
- at least one control and management apparatus which controls said controlled electric motors (4) and is configured for the simultaneous adjustment of the power supply of said electric motors (4), in so doing defining a common rule of motion and a constant application of mutually opposite torques, which define a preloading on said ring gear (6) by said pinions (5) in order to cancel out mechanical meshing plays on the ring gear (6).

2. The movement assembly according to claim 1, **characterized in that** said controlled electric motors (4) are low-inertia brushless motors, preferably of a type chosen from salient-pole motors, permanent magnet motors, low-inertia synchronous servomotors, stepper motors and derivatives thereof.

3. The movement assembly according to claim 1, **characterized in that** each of said controlled electric motors (4) has a rated power comprised between 0.5 kW and 5 kW, preferably between 1 kW and 3 kW, even more preferably between 1.2 kW and 2.5 kW.

4. The movement assembly according to claim 1, **characterized in that** said at least one control and management apparatus comprises:
- at least one device for instantaneous detection of the position of the rotor of each controlled electric motor (4), the device being of a type selected from an optical rotary encoder, an inductive rotary encoder, an infinite potentiometer, a rotary resolver, and combinations thereof;
- at least one apparatus for controlling the position and speed of a said controlled electric motor (4) of a type chosen from a motor speed controller, a motor driver, a PWM controller, a voltage regulator dimmer, and combinations thereof.

5. The movement assembly according to claim 4, **characterized in that** said at least one apparatus for controlling the position and speed is configured for the execution of software for the simultaneous control of said at least two controlled electric motors (4) in order to maintain said preloading on said ring gear (6) with corresponding engagement of at least one tooth of at least one first pinion (5) on a first delimiting wall of a recess between successive teeth of said ring gear (6) and of at least one tooth of at least one second pinion (5) on a second wall, opposite the first wall, for delimiting a recess between successive teeth of said ring gear (6).

6. The movement assembly according to one or more of the preceding claims, **characterized in that** a transmission ratio between one of said pinions (5) and said ring gear (6) is comprised between 1 to 20 and 1 to 1, preferably between 1 to 10 and 1 to 2, even more preferably between 1 to 3 and 1 to 6.

7. The movement assembly according to one or more of the preceding claims, **characterized in that** said driven unit (3) is integral with a wrapping wheel (B), equipped with means designed to temporarily block at least one product and at least one sheet for the respective wrapping and movement thereof along a trajectory that affects a plurality of areas for folding and juxtaposition of said sheet on said product, according to a highly dynamic rule of motion.

8. The movement assembly according to one or more of the preceding claims, **characterized in that** said driven unit (3) is integral with a product singulator disk (A) provided with a plurality of peripheral seats for the temporary accommodation of at least one product and its movement along a substantially circular trajectory according to a highly dynamic rule of motion.

9. An operating station for packaging machines, **characterized in that** it comprises at least one movement assembly (1) according to one or more of the preceding claims.

10. A packaging machine, **characterized in that** it comprises at least one operating station (A, B) provided with at least one movement assembly (1) according to one or more of the preceding claims.
